# EUROPÄISCHE PATENTANMELDUNG

(11) **EP 2 191 721 A1**
(43) Veröffentlichungstag der Anmeldung: **02.06.2010**
(21) Anmeldenummer: 08020802.8
(22) Anmeldetag: 01.12.2008
(51) Int. Cl.: A01N 59/08, A61L 2/18, C02F 1/461, C02F 1/467, C02F 1/32, C02F 1/44, C02F 1/66

(54) **Desinfektionsmittel auf Basis hypochloriger Säure und deren Salze sowie Verfahren zu seiner Herstellung mittels elektrochemischer Aktivierung**

(71) Anmelder: ActiDes GmbH, 69518 Absteinach (DE)
(72) Erfinder: Beltrup, Alfons, 35410 Hungen (DE); Fischer, Christian, 69483 Wald-Michelbach (DE); Jöst, Bernd, 69518 Abtsteinach (DE); Wenner, Achim, 69483 Wald-Michelbach (DE)
(74) Vertreter: Lenz, Steffen

(57) **Zusammenfassung**

Es wird ein Verfahren zur Herstellung eines hypochlorige Säure (HOCL) und/oder Hypochlorit (OCL⁻) enthaltenden Desinfektionsmittels durch elektrochemische Aktivierung einer verdünnten Wasser-/Chloridlösung vorgeschlagen, indem enthärtetem oder demineralisiertem Wasser eine Chloridlösung zugesetzt und die solchermaßen erhaltene verdünnte Wasser-/Chloridlösung in einem Elektrolysereaktor (10) mit wenigstens einem Kathodenraum mit einer Kathode (102) und mit wenigstens einem hiervon räumlich getrennten Anodenraum mit einer Anode (101) durch Anlegen einer elektrischen Spannung an die Elektroden mit einem elektrischen Strom beaufschlagt wird, um das Chlorid im Anodenraum zumindest teilweise in hypochlorige Säure und/oder Hypochlorit zu überführen. Erfindungsgemäß ist vorgesehen, daß der Wasser-/ Chloridlösung vor Eintritt in den Elektrolysereaktor (10) wenigstens ein vorzugsweise mineralischer Protonenakzeptor, insbesondere in Form einer Base oder in Form eines Puffers, zugesetzt wird, wie beispielsweise einem solchen aus der Gruppe der Alkalimetallhydroxide (MeOH), Alkalimetallhydrogencarbonate (MeH-CO₃) und Alkalimetallcarbonate (Me₂CO₃).

## Beschreibung

Die Erfindung betrifft ein Verfahren zur Herstellung eines hypochlorige Säure (HOCL) und/oder Hypochlorit (OCl⁻) enthaltenden Desinfektionsmittels durch elektrochemische Aktivierung einer verdünnten Wasser-/Chloridlösung, indem enthärtetem oder demineralisiertem Wasser eine Chloridlösung zugesetzt und die solchermaßen erhaltene verdünnte Wasser-/Chloridlösung in einem Elektrolysereaktor mit wenigstens einem Kathodenraum mit einer Kathode und mit wenigstens einem hiervon räumlich getrennten Anodenraum mit einer Anode durch Anlegen einer elektrischen Spannung an die Elektroden mit einem elektrischen Strom beaufschlagt wird, um das Chlorid im Anodenraum zumindest teilweise in hypochlorige Säure und/oder Hypochlorit zu überführen.

Das Verfahren der elektrochemischen Aktivierung ist insbesondere zur Desinfektion von Wasser bekannt. Hierbei wird eine verdünnte Lösung eines Chlorids, insbesondere in Form eines Neutralsalzes, wie Natriumchlorid (NaCl) bzw. Kochsalz, Kaliumchlorid (KCl) oder dergleichen, in einem Elektrolysereaktor durch Anlegen einer Spannung an dessen Elektroden in einen zur Desinfektion geeigneten, aktiven Zustand überführt, in welchem zumindest ein Teil des eingesetzten Chlorids in hypochlorige Säure (HOCl) und/oder deren Salze (Hypochlorite, ClO⁻) umgewandelt worden ist und welcher metastabiler Natur sein und je nach Art des Wassers und den eingestellten Verfahrensparametern über lange Zeit andauern kann. Der Elektrolysereaktor weist einen Kathodenraum mit einer oder mehreren Kathoden sowie einen Anodenraum mit einer oder mehreren Anoden auf, wobei der Anodenraum und der Kathodenraum mittels eines elektrisch leitfähigen - insbesondere eines für Ionen leitfähigen - Diaphragmas bzw. mittels einer Membran mit den genannten Eigenschaften räumlich voneinander getrennt sind, um eine Vermischung der in beiden Räumen befindlichen Wasser-/Chloridlösung zu verhindern. Während bei der Elektrolyse in der Regel ein im wesentlichen vollständiger Umsatz der eingesetzten Edukte - im Falle des Einsatzes einer Natriumchloridlösung zu Chlorgas (Cl₂) und Natronlauge (NaOH), im Falle des Einsatzes einer Kaliumchloridlösung zu Chlorgas und Kalilauge (KOH) - unter Einsatz hoch konzentrierter Elektrolytlösungen angestrebt wird, um vornehmlich die Chlorgasausbeute zu maximieren, wird die Wasser-/Chloridlösung bei der elektrochemischen Aktivierung demgegenüber in erheblich verdünnterer Form, in der Regel in einer Konzentration von maximal 20 g/l, vorzugsweise maximal 10 g/l, dem Elektrolysereaktor aufgegeben und lediglich zu einem sehr geringen Anteil umgesetzt, um die physikalischen und chemischen Eigenschaften der Lösung in vorteilhafter Weise zu verändern und insbesondere auch das Redoxpotential des mit dem Chlorid als Elektrolyt versetzten Wassers zu erhöhen, wodurch eine sehr effektive desinfizierende Wirkung erhalten wird. Entsprechend werden die Reaktionsbedingungen, wie Druck, Temperatur, Elektrodenstrom etc., bei der elektrochemischen Aktivierung im allgemeinen moderater gewählt als bei der Chlor-Alkalielektrolyse. Von Vorteil bei einer solchen elektrochemischen Behandlung, welche im Rahmen der vorliegenden Anmeldung als "elektrochemische Aktivierung" bezeichnet ist, ist insbesondere die gute Gesundheits- und Umweltverträglichkeit der anläßlich der elektrochemischen Aktivierung erzeugten Stoffe in deren jeweiligen Konzentrationen, welche beispielsweise auch gemäß der deutschen Trinkwasserverordnung (TrinkwV) zugelassen sind.

Wie bei der Elektrolyse findet auch bei der elektrochemischen Aktivierung an der Anode (d.h. an der positiv geladenen Elektrode) eine Oxidation statt, während an der Kathode (d.h. an der negativ geladenen Elektrode) eine Reduktion stattfindet. Beim Einsatz einer verdünnten Neutralsalzlösung, wie einer Natriumchloridlösung, wird an der Kathode gemäß der nachfolgenden Reaktionsgleichung (1) vornehmlich Wasserstoff erzeugt:

2 H₂O + 2 e⁻ ---> H₂ + 2 OH⁻ (1),

welcher nach Ausgasen aus der Lösung z.B. aus dem Kathodenraum des Reaktors abgeführt wird. Darüber hinaus wird die verdünnte Wasser-/Chloridlösung in dem Kathodenraum des Elektrolysereaktors durch die Bildung von Hydroxidionen alkalisch.

An der Anode werden gemäß den nachfolgenden Reaktionsgleichungen (2) und (3) insbesondere die chemischen Oxidationsmittel Sauerstoff (O₂) und Chlor (Cl₂) erzeugt, welche bekanntermaßen hinsichtlich einer Desinfektion von Wasser wirksam sind. Ferner ist zu beachten, daß infolge der Bildung von H₃O⁺-Ionen die verdünnte Wasser-/Chloridlösung in dem Anodenraum des Elektrolysereaktors sauer wird:

6 H₂O ---> O₂ + 4 H₃O⁺ + 4 e⁻ (2),

2 Cl⁻ ---> Cl₂ + 2 e⁻ (3).

Chlor wiederum dissoziiert in Wasser entsprechend der nachfolgenden Gleichgewichtsreaktion (4) in Hypochloritionen (OCl⁻) und Chloridionen (Cl⁻), welche sich wiederum mit einem geeigneten Kation, z.B. Na⁺ aus dem Elektrolyt, oder mit einem Proton bzw. einem H₃O⁺-Ion zu dem entsprechenden (Natrium)salz bzw. zu der entsprechenden Säure, d.h. zu hypochloriger Säure (HClO) und Chlorwasserstoff bzw. verdünnter Salzsäure (HCl) reagieren können:

Cl₂ + 3 H₂O <===> 2 H₃O⁺ + OCl⁻ + Cl⁻ (4).

Ferner können aus den vorgenannten, an der Anode gebildeten Stoffen durch Sekundärreaktionen weitere Stoffe erzeugt werden, welche ebenfalls bekanntermaßen im Hinblick auf eine Desinfektion von Wasser wirksam sind. Hierbei handelt es sich insbesondere um Wasserstoffperoxid (H₂O₂, Reaktionsgleichung (5)), Ozon (O₃, Reaktionsgleichung (6)), Chlordioxid (ClO₂, Reaktionsgleichung (7)), Chlorate (ClO₃⁻, Reaktionsgleichung (8)) und verschiedene Radikale (Reaktionsgleichungen (9) und (10)).

4 H₂O ---> H₂O₂ + 2 H₃O⁺ + 2 e⁻ (5),

O₂ + 3 H₂O ---> O₃ + 2 H₃O⁺ + 2 e⁻ (6),

Cl⁻ + 4 OH⁻ ---> ClO₂ + 2 H₂O + 5 e⁻ (7),

3 OCl⁻ ---> ClO₃⁻ + 2 Cl⁻ (8),

5 H₂O ---> HO₂^{·} + 3 H₃O⁺ + 3 e⁻ (9),

H₂O₂ + H₂O ---> HO₂^{·} + H₃O⁺ + e⁻ (10).

Nachteilig bei dem Verfahren der elektrochemischen Aktivierung ist insbesondere die mangelnde Qualitätskontrolle, da die für eine hinreichende Desinfektion des Wassers erforderlichen, meist empirisch ermittelten Verfahrensparameter, wie Menge der zugesetzten Elektrolyt- bzw. Chloridlösung, eingestellter Elektrodenspannung bzw. -strom und dergleichen, nicht nur von dem eingesetzten Elektrolysereaktor, wie dessen Reaktionsvolumen, dessen Anoden- und Kathodenfläche, der Verweilzeit des zu desinfizierenden Wassers in dem Reaktor etc., sondern insbesondere auch von der Zusammensetzung des jeweiligen, zu desinfizierenden Wassers, wie insbesondere dessen Leitfähigkeit und dessen Redoxpotential, abhängen. Dabei können für ein bestimmtes Wasser - zumeist empirisch - ermittelte Verfahrensparameter, welche bei diesem Wasser zu einer zufriedenstellenden Desinfektionswirkung führen, bei einem anderen Wasser zu einer nur sehr mangelhaften Desinfektionswirkung führen. Ferner hat sich insbesondere gezeigt, daß die mittels elektrochemischer Aktivierung gemäß dem Stand der Technik hergestellten Lösungen in der Regel - teils hochgradig - mit unerwünschten Produkten verunreinigt sind, wobei häufig gemäß der obigen Reaktionsgleichung (3) praktisch ausschließlich Chlorgas (Cl₂) erzeugt wird, welches bei herkömmlichen Elektrolyseprozessen zwar erwünscht, bei der elektrochemischen Aktivierung zur Erzeugung eines Desinfektionsmittels jedoch gerade nicht erwünscht ist, da es einen stechenden Geruch der elektrochemisch aktivierten Lösung verursacht sowie aufgrund seiner Flüchtigkeit aus dieser relativ schnell ausgast, so daß die Lebensdauer eines solchermaßen erzeugten Desinfektionsmittels sehr begrenzt ist. In diesem Zusammenhang sei auch erwähnt, daß sich grundsätzlich aufgrund der in Abhängigkeit der vorgenannten Parameter stark schwankenden Zusammensetzung der elektrochemisch aktivierten Lösung keine zuverlässigen Angaben hinsichtlich der Haltbarkeit bzw. Lagerfähigkeit der elektrochemisch aktivierten Lösung treffen lassen, so daß praktisch nur eine Produktion derselben vor Ort in Betracht kommt. In der Praxis hat sich das Verfahren daher - vornehmlich aufgrund seiner schlechten Handhabbarkeit bzw. der nur unzureichend möglichen Garantie einer hinreichenden Desinfektion - am Markt nicht durchsetzen können.

Ein gattungsgemäßes Verfahren zur Erzeugung eines Desinfektionsmittels mittels elektrochemischer Aktivierung ist beispielsweise aus der WO 2007/093395 A2 bekannt, welche hiermit ausdrücklich zum Gegenstand der vorliegenden Offenbarung gemacht wird. Um für eine möglichst umfassende Verschiebung des Gleichgewichtes an freiem Chlor in dem Desinfektionsmittel in Form der verdünnten, elektrochemisch aktivierten Lösung hin zu der desinfektiös hoch wirksamen hypochlorigen Säure bei einem ebenfalls hinsichtlich der Desinfektionswirkung günstigen, möglichst hohen Redoxpotential zu sorgen, schlägt die genannte Druckschrift vor, den pH-Wert des anodisch erhaltenen Desinfektionsmittels ("Anolyt") auf einen Wert zwischen 2,5 und 3,5 zu steuern. Sinkt der Wert unter etwa 2,5 ab, so reagiert die hypochlorige Säure mit den oben genannten Nachteilen zu elementarem Chlor (Cl₂), während bei einem pH-Wert oberhalb etwa 3,5 das Redoxpotential der elektrochemisch aktivierten Lösung abnimmt und die hypochlorige Säure ab etwa einem pH-Wert von 6 unter Abspaltung ihres Protons zu Hypochlorit dissoziiert, welches zwar ebenfalls desinfektiös wirksam ist, jedoch um etwa 1 bis 2 Zehnerpotenzen geringer als die hypochlorige Säure selbst. Insoweit stellt das aus der WO 2007/093395 A2 ein sehr wirksames Verfahren zur Erzeugung eines gattungsgemäßen Desinfektionsmittels dar.

Grundsätzlich hat sich jedoch gezeigt, daß zur elektrochemischen Aktivierung eingesetzte Elektrolysereaktoren sehr empfindlich gegenüber zweiwertigen Kationen, wie insbesondere die Härtebildner Calcium und Magnesium sind, welche die den Anodenraum von dem Kathiodenraum trennende Membran relativ leicht zusetzen können, weshalb das eingesetzte Wasser enthärtet werden sollte, um die Lebensdauer des Elektrolysereaktors zu erhöhen und seine Wartungsintervalle zu verlängern.

Darüber hinaus hat es sich, wie ebenfalls in der vorgenannten WO 2007/093395 A2 erwähnt, als vorteilhaft erwiesen, wenn das zur elektrochemischen Aktivierung eingesetzte Wasser - bzw. die verdünnte Wasser-/Chloridlösung - eine möglichst hohe Reinheit aufweist, wobei es insbesondere im wesentlichen frei sein sollte von anderen Halogenidionen als Chloridionen, also solchen aus der Gruppe Bromid (Br⁻), Fluorid (F⁻) und Iodid (I⁻), aber auch Oxohalogenidionen, wie Hypochlorit (ClO⁻), Chlorit (ClO₂⁻), Chlorat (ClO₃⁻), Perchlorat (ClO₄⁻), Bromat (BrO₃⁻) etc. Ferner sollte es im wesentlichen frei von Schwermetallen sein, wie insbesondere solchen aus der Gruppe Antimon (Sb), Arsen (As), Blei (Pb), Cadmium (Cd), Chrom (Cr), Nickel (Ni), Quecksilber (Hg), Selen (Se), Eisen (Fe) und Mangan (Mn). Aus diesem Grund schlägt die WO 2007/093395 A2 vor, daß die spezifische elektrische Leitfähigkeit des elektrochemisch zu aktivierenden Wassers vor Zusetzen der Chloridlösung auf einen Wert von höchstens 350 µS/cm oder vorzugsweise geringer eingestellt wird, was die Reproduzierbarkeit des Verfahrens hinsichtlich der Desinfektions- und Depotwirkung des erzeugten Desinfektionsmittels erhöht, und zwar praktisch unabhängig von dem eingesetzten Wasser. Eine solche "Standardisierung" des eingesetzten Rohwassers ermöglicht nicht nur eine besonders einfache Einstellung der Verfahrensparameter, wie Elektrodenspannung bzw. -strom, Verweilzeit der verdünnten Wasser-/Chloridlösung in dem Elektrolysereaktor, Menge an zudosierter Chloridlösung etc., sondern macht auch auf einfache Weise einen Einsatz von Wässern mit praktisch beliebiger Zusammensetzung ohne jegliche Beeinträchtigung des erhaltenen Desinfektionsmittels möglich, wodurch eine höchst zuverlässige und reproduzierbare Qualität des Desinfektionsmittels gewährleistet wird. Darüber hinaus lassen sich so in dem für die elektrochemische Aktivierung eingesetzten Wasser gegebenenfalls enthaltene Ionen, welche bei der elektrochemischen Aktivierung - wenn auch in nur geringen Konzentrationen - in gesundheitlich bedenkliche Stoffe umgewandelt werden, zumindest weitestgehend eliminieren. Als Beispiel seien Bromidionen erwähnt, welche - wie auch bei der bei der Trinkwasseraufbereitung häufig durchgeführten Ozonierung - zu Bromat oxidiert werden können, welches in höheren Konzentrationen eine cancerogene Wirkung besitzt. Mit "spezifischer elektrischer Leitfähigkeit" ist in diesem Zusammenhang im übrigen die spezifische ionische Leitfähigkeit angesprochen, welche auf der Leitfähigkeit des Wassers bzw. der Wasser-/Chloridlösung aufgrund der hierin gelösten, bewegungsfähigen Ionen beruht.

Als problematisch hat sich hierbei indes erwiesen, daß beim Einsatz von enthärtetem und insbesondere demineralisiertem Wasser für die elektrochemische Aktivierung die Steuerung des pH-Wertes einen zur Desinfektion günstigen Wert, wie etwa zwischen 2,5 und 6, in welchem das erzeugte freie Chlor vornehmlich in Form von hypochloriger Säure vorliegt, nur relativ schwer möglich ist, wobei insbesondere der Menge an erzeugtem freiem Chlor Grenzen gesetzt sind, da ein erhöhter Umsatz der verdünnten Wasser-/Chloridlösung in dem Elektrolysereaktor (z.B. durch längere Verweilzeit, höhere Elektrodenspannung oder dergleichen) mit einer verstärkten Produktion von H₃O⁺-Ionen Salzsäure einhergeht (vgl. obige Reaktionsgleichung (4)), so daß der pH-Wert Gefahr läuft, schnell auf Werte von unterhalb etwa 2,5 abgesenkt zu werden, wo das freie Chlor praktisch vollständig in Form von elementarem Chlor (Cl₂) vorliegt und die weiter oben genannten Nachteile gegeben sind.

Der Erfindung liegt daher die Aufgabe zugrunde, ein Verfahren der eingangs genannten Art dahingehend weiterzubilden, daß auf einfache und kostengünstige Weise die Ausbeute an hypochloriger Säure oder auch Hypochlorit erhöht werden kann, welches insbesondere auch die Möglichkeit eines Einsatzes von demineralisiertem oder destilliertem Wasser oder allgemein eines "standardisierten" Wassers für die dem Elektrolysereaktor aufgegebene Wasser-/Chloridlösung gewährleisten sollte, ohne den pH-Wert des erzeugten Desinfektionsmittels auf einen Wert unterhalb etwa 2,5 absenken zu müssen, in welchem das erzeugte freie Chlor vornehmlich in Form von elementarem Chlor (Cl₂) vorliegt.

Erfindungsgemäß wird diese Aufgabe bei einem Verfahren der eingangs genannten Art dadurch gelöst, daß der Wasser-/Chloridlösung vor Eintritt in den Elektrolysereaktor wenigstens ein Protonenakzeptor zugesetzt wird.

Das erfindungsgemäße Verfahren macht es möglich, bei einem Einsatz von enthärtetem oder auch gänzlich demineralisiertem oder destilliertem Wasser, welchem die Chloridlösung sowie der Protonenakzeptor vor dem Eintritt in den Elektrolysereaktor zugesetzt wird, für eine gegenüber dem Stand der Technik erhöhte Ausbeute an freiem Chlor in der desinfektiös wirksamen anodischen Lösung (d.h. dem aus dem Anodenraum des Elektrolysereaktors austretenden Desinfektionsmittel) zu sorgen, bei welchem der pH-Wert gleichwohl auf einem Niveau oberhalb etwa 2,5 gehalten werden kann, in welchem das Gleichgewicht von Cl_{2/}HOCl/ClO⁻ noch nicht in Richtung des unerwünschten elementaren Chlors (Cl₂) hin verschoben ist. Der pH-Wert der elektrochemisch aktivierten, anodischen Lösung kann dabei insbesondere entsprechend der eingangs zitierten WO 2007/093395 A2 auf einen Wertebereich zwischen etwa 2,5 und etwa 3,5 gesteuert werden, um bei einem hohen Redoxpotential des Desinfektionsmittels (z.B. bis in einen Bereich um 1340 mV vs. SHE, d.h. gegenüber der Standardwasserstoffelektrode) für ein praktisch vollständiges Vorliegen des hierin enthaltenen Chlors in Form der erwünschten hypochlorigen Säure zu sorgen. Falls gewünscht, kann der pH-Wert indes selbstverständlich auch höher, gar in einem Bereich oberhalb etwa 6,5, in welchem die hypochlorige Säure unter Abspaltung ihres Protons zu Hypochlorit dissoziiert, eingestellt werden, wobei ein solches Desinfektionsmittel bei Bedarf wieder angesäuert werden kann, um das Hypochlorit in hypochlorige Säure zu überführen und die Wirksamkeit des Desinfektionsmittels hierdurch zu erhöhen. In jedem Fall ermöglicht der erfindungsgemäße Zusatz des Protonenakzeptors zu der dem Elektrolysereaktor aufgegebenen Wasser-/Chloridlösung nicht nur eine besonders einfache Einstellung der Verfahrensparameter, wie Elektrodenspannung bzw. -strom, Verweilzeit der verdünnten Wasser-/Chloridlösung in dem Elektrolysereaktor, Menge an zudosierter Chloridlösung etc., sondern macht auch auf einfache Weise einen Einsatz von Wässern mit praktisch beliebiger Zusammensetzung ohne jegliche Beeinträchtigung des erhaltenen Desinfektionsmittels möglich, weil das eingesetzte Wasser durch Enthärtung und insbesondere auch durch praktisch vollständige Entsalzung "standardisiert" werden kann und gleichwohl keine Gefahr dahingehend besteht, daß nur eine sehr geringe Ausbeute an freiem Chlor und/oder ein zu geringer pH-Wert des anodisch erhaltenen Desinfektionsmittels erhalten wird, welcher das Gleichgewicht des freien Chlors in Richtung elementarem Chlor verschieben würde.

Der erfindungsgemäß eingesetzte Protonenakzeptor kann in Form einer Base und/oder in Form eines Puffers eingesetzt werden, wobei vermutet wird, daß seine vorteilhafte Wirkung darin besteht, daß er die gemäß der obigen Reaktionsgleichung (4) durch die Disproportionierung von dem anodisch erzeugten, elementarem Chlor zu Cl⁻ bzw. OCl⁻ entstehenden H₃O⁺-Ionen "wegzufangen" vermag, was einerseits die Disproportionierung von elementarem Chlor insbesondere zu Hypochlorit (OCl⁻) begünstigt und andererseits dafür sorgt, daß das Gleichgewicht von Cl₂/HOCl/OCl⁻ auch bei relativ hohen Ausbeuten an freiem Chlor anläßlich der elektrochemischen Aktivierung nicht in Richtung des elementaren Chlors hin verschoben wird, indem der pH-Wert auch im Falle eines Einsatzes von Reinwasser nicht unterhalb etwa 2,5 abfällt.

Der Protonenakzeptor kann hierbei entweder bereits mit der Chloridlösung vorgemischt und mit dieser gemeinsam dem dem Elektrolysereaktor aufgegebenen Rohwasser zugesetzt werden, oder der Protonenakzeptor wird dem Rohwasser oder der verdünnten Wasser-/Chloridlösung separat, beispielsweise ebenfalls in gelöster Form, zugesetzt, was z.B. mittels einer steuerbaren Dosierpumpe geschehen kann. Letztere Alternative besitzt den Vorteil einer freien Steuerung der Konzentration an zugesetztem Protonenakzeptor unabhängig von der Chloridlösung, so daß letztendlich die Konzentration des in dem anodisch erzeugten Desinfektionsmittel vorhandenen freien Chlors in weiten Grenzen variiert werden kann.

Um in das zu erzeugende Desinfektionsmittel keine organischen Substanzen einzutragen, kann in vorteilhafter Ausgestaltung vorgesehen sein, daß ein mineralischer Protonenakzeptor eingesetzt wird, also ein solcher, welcher keine Kohlenwasserstoffreste aufweist.

Im Hinblick auf die oben erläuterte Problematik im Zusammenhang mit zwei- oder mehrwertigen Kationen, wie insbesondere Härtebildnern, ist es ferner von Vorteil, wenn ein Protonenakzeptor eingesetzt wird, dessen Kation(en) die Wertigkeit +I besitzen, wobei sich insbesondere Protonenakzeptoren als zweckmäßig erwiesen haben, deren Kationen aus der Gruppe der Alkalimetalle, vorzugsweise aus der Gruppe Lithium (Li), Natrium (Na) und Kalium (K), gewählt sind.

Als Beispiele geeigneter Protonenakzeptoren seien Alkalimetallhydroxide (MeOH), Alkalimetallhydrogencarbonate (MeH-CO₃) und Alkalimetallcarbonate (Me₂CO₃) genannt, wobei die vorstehende Auflistung nicht abschließend zu verstehen ist. Alternativ oder zusätzlich kann der Wasser-/Chloridlösung vor Eintritt in den Elektrolysereaktor auch ein Bruchteil der im Kathodenraum desselben erzeugten kathodischen Lösung, dem sogenannten "Katholyt", zugesetzt werden, wobei als Protonenakzeptor in diesem Fall die gemäß obiger Gleichung (1) erzeugten Hydroxidionen (OH⁻) dienen. In diesem Fall kann es zweckmäßig sein, den weiterhin in dem Katholyt gebildeten elementaren Wasserstoff (H₂) vor dem Zusetzen zu der Wasser-/Chloridlösung zu entfernen, was beispielsweise durch Einblasen von Luft, Stickstoff etc. oder mittels beliebiger anderer bekannter Methoden geschehen kann.

Wie bereits erwähnt, kann gemäß einer bevorzugten Ausführungsform des erfindungsgemäßen Verfahrens vorgesehen sein, daß der pH-Wert des im Anodenraum erzeugten Desinfektionsmittels auf einen Wert zwischen 2,5 und 6, insbesondere zwischen 2,5 und 5, vorzugsweise zwischen 2,5 und 4, gesteuert wird, wobei insbesondere ein pH-Wertebereich von etwa 2,5 bis etwa 3,5 oder von etwa 2,7 bis etwa 3,5 günstig sein kann, um für ein praktisch vollständiges Vorliegen des freien Chlors in Form von hypochloriger Säure bei einem hohen Redoxpotential des Desinfektionsmittels, z.B. im Bereich von etwa 1340 mV, zu sorgen.

In weiterhin bevorzugter Ausführung kann vorgesehen sein, daß das eingesetzte enthärtete oder demineralisierte Wasser eine Härte zwischen 0 und 4 dH, insbesondere zwischen 0 und 2 dH aufweist. Mit "Härte" ist in diesem Zusammenhang die Konzentration von zweiwertigen Erdalkalimetallionen, also Calcium (Ca), Magnesium (Mg), Strontium (Sr) und Barium (Ba), wobei die beiden letztgenannten in der Praxis in aller Regel keine Rolle spielen. 1°dH entspricht einer Konzentration von Erdalkalimetallionen von 0,179 mMol/l, 2°dH einer Konzentration von 0,358 mMol/l etc. Eine solche Einstellung der Härte des eingesetzten Wassers ist insbesondere bei relativ harten, calcium- und/oder magnesiumhaltigen Wässern zweckmäßig, um die Lebensdauer des Elektrolysereaktors zu erhöhen bzw. dessen Wartungsintervalle zu verlängern. Indes sollte insbesondere bei sehr leitfähigen Wässern, d.h. bei solchen mit einer hohen Gesamtionenkonzentration, dafür Sorge getragen werden, daß das Wasser nicht lediglich mittels eines Ionentauschers enthärtet wird, da der Ionentauscher je ein zweiwertiges Erdalkalimetallion durch zwei einwertige Alkalimetallionen ersetzt und somit die Leitfähigkeit insgesamt weiter erhöht wird. Aus diesem Grund kann es zweckmäßig sein, das Wasser zunächst zu enthärten und sodann die Leitfähigkeit durch zusätzliche Maßnahmen abzusenken.

In diesem Zusammenhang sieht eine vorteilhafte Ausgestaltung des erfindungsgemäßen Verfahrens vor, daß die spezifische elektrische Leitfähigkeit des eingesetzten Wassers auf einen Wert von höchstens 350 µS/cm, insbesondere höchstens 150 µS/cm, vorzugsweise höchstens 100 µS/cm, wie beispielsweise höchstens etwa 50 µS/cm, eingestellt wird, wobei das Verfahren insbesondere auch einen vorteilhaften Einsatz von standardisiertem demineralisiertem bzw. deionisiertem Wasser, sogenanntem vollentsalzten Wasser oder "VE-Wasser," mit einer spezifischen elektrischen Leitfähigkeit von kleiner 25 µS/cm ermöglicht. Zur Entsalzung und/oder Enthärtung bzw. Demineralisierung des eingesetzten Wassers kann vorzugsweise ein Membranverfahren, wie insbesondere Umkehrosmose, Mikro-, Nano- oder Ultrafiltration, eingesetzt werden, wobei ein weiterer Vorteil solcher Membranverfahren darin besteht, daß in dem Rohwasser gegebenenfalls vorhandene Verunreinigungen entfernt werden. Dies gilt einerseits für organische Verunreinigungen, so daß beispielsweise die Bildung von chlororganischen Verbindungen während der elektrochemischen Aktivierung zuverlässig vermieden wird, andererseits für anorganische Verunreinigungen, wie insbesondere Metallionen, z.B. Kupfer, Eisen, Mangan etc., welche andernfalls in dem fertigen Desinfektionsmittel einen unerwünschten Abbau der erzeugten hypochlorigen Säure katalytisch begünstigen könnten. Selbstverständlich kommen indes auch andere als solche bekannte Verfahren zur Enthärtung und/oder Demineralisierung des eingesetzten Wassers in Betracht, wie beispielsweise Destillation oder - wie bereits angesprochen - Inkontaktbringen des Wassers mit Ionenaustauscherharzen.

Während die Chloridkonzentration, insbesondere in Form von Natrium- und/oder Kaliumchlorid, der dem Elektrolysereaktor zugesetzten, verdünnten Wasser-/Chloridlösung zweckmäßig auf einen Wert von höchstens 20 g/l, insbesondere zwischen 0,1 und 10 g/l, vorzugsweise zwischen 0,1 und 5 g/l gesteuert wird, reicht es in aller Regel aus, wenn die Konzentration des Protonenakzeptors in der dem Elektrolysereaktor zugesetzten Wasser-/Chloridlösung je nach erwünschter Konzentration an freiem Chlor in dem Desinfektionsmittel auf einen Wert zwischen 1 und 5000 mg/l, insbesondere zwischen 1 und 1000 mg/l, gesteuert wird. Auf diese Weise läßt sich auch im Falle eines Einsatzes von vollentsalztem bzw. demineralisiertem Wasser, wie sogenanntem "VE-Wasser", problemlos eine Konzentration an freiem Chlor in dem erzeugten Desinfektionsmittel in einem erwünschten Bereich von etwa 10 mg/l bis etwa 50 mg/l, vorzugsweise im Bereich von etwa 20 mg/l bis etwa 40 mg/l, erreichen, was bei einem pH-Wert von etwa 2,5 bis 3,5 des Desinfektionsmittels (Anolyt) einer Konzentration an hypochloriger Säure (HClO) von etwa 7,4 mg/l bis etwa 37 mg/l bzw. von etwa 14,8 mg/l bis etwa 29,6 mg/l entspricht.

Wie bereits angedeutet, kann in vorteilhafter Ausgestaltung vorgesehen sein, daß ausschließlich die in dem Anodenraum des Elektrolysereaktors erzeugte, elektrochemisch aktivierte, verdünnte Lösung als Desinfektionsmittel verwendet wird, während die kathodische Lösung (der sogenannte "Katholyt") verworfen werden kann, oder - wie ebenfalle bereits angedeutet - ein Bruchteil des Katholyts (oder genauer: die hierin enthaltenen Hydroxidionen) wird insbesondere in der oben angegebenen Menge als erfindungsgemäßer Protonenakzeptor verwendet. Hierbei hat sich gezeigt, daß der Elektrolysereaktor auch mit einem geringeren Volumenstrom durch den Kathodenraum als durch den Anodenraum betrieben werden kann, ohne daß diese zu Qualitätseinbußen des anodisch erzeugten Desinfektionsmittels (des sogenannten "Anolyts") führt, um die Menge an nicht zu Zwecken einer Desinfektion verwendetem Katholyt zu verringern.

Die Erfindung betrifft schließlich auch ein mittels eines Verfahrens der vorgenannten Art hergestelltes Desinfektionsmittel auf der Basis einer hypochlorige Säure (HOCL) und/oder Hypochlorit (OCl⁻) enthaltenden, elektrochemisch aktivierten, anodischen, verdünnten, enthärteten oder demineralisierten, wäßrigen Lösung, wobei das Desinfektionsmittel einen Protonenakzeptor, insbesondere einen solchen der oben genannten Art, enthält, wobei das Desinfektionsmittel vorzugsweise einen pH-Wert zwischen 2,5 und 6, insbesondere zwischen 2,5 und 5, vorzugsweise zwischen 2,5 und 4" wie beispielsweise zwischen etwa 2,5 und 3,5 oder zwischen etwa 2,7 und etwa 3,5, etwa aufweist.

Das erfindungsgemäße Desinfektionsmittel in Form der elektrochemisch aktivierten, anodischen Lösung kann z.B. überall dort zum Einsatz gelangen, wo eine einwandfreie Desinfektion von Wasser, insbesondere auch unter Einhaltung der Trinkwasserverordnung, erforderlich ist, wie zur Desinfektion der kommunalen Wasserversorgung oder der Wasserversorgung von Krankenhäusern, Schulen, Pflegeheimen, Gewerbebetrieben, Hotels oder anderen gastronomischen Betrieben und Sportvereinen (z.B. zur Zudosierung in das Wasser der sanitären Anlagen), Bahnhöfen, Flughäfen, Großküchen, zur Desinfektion von Schwimmbadwasser oder Regenwasser (z.B. zur Beigabe bei der Regenwasseraufbereitung) bzw. zum Zusatz in Wasservorratstanks beliebiger Art, für Entsalzungsanlagen, wie Meerwasserentsalzungsanlagen auf Schiffen oder auf dem Binnenland, zur Verhinderung der Verschleppung von Keimen im Wasser von Textilwaschmaschinen, zur schnellen Entfärbung von Färbereiabwässern, für praktisch beliebige Industrie(ab)wässer, wie zur Beimischung in Kühlwasser (beispielsweise für Dreh-, Fräs-, Bohr-, Schneide- oder andere Werkzeugmaschinen), für Klimaanlagen und Luftbefeuchtungssysteme, für Osmoseanlagen, als Zusatz zu dem Wasser zum Anmachen von Beton und Zement, als Zusatz zu dem Wasser bei der Herstellung elektronischer Bauelemente und Schaltungen, als Zugabe in das Wasser von Schnittblumen, zur Zudosierung in das Tränke- und Abwasser von Tierhaltungsbetrieben und Schlachthöfen bzw. zur Desinfektion von in diesem Zusammenhang eingesetzten Vorrichtungen, wie Brutmaschinen, Melkmaschinen und dergleichen, etc. In allen Fällen wird zur akuten Desinfektion oder während des normalen Betriebs eine zuverlässige Desinfektion erreicht und wird die unerwünschte Bildung von Algen und/oder Schlämmen verhindert. Das Desinfektionsmittel kann dabei entweder in im wesentlichen reiner Form oder - insbesondere bei der Wasseraufbereitung - in Form einer Verdünnung von bis zu etwa 1:500 oder bis zu etwa 1:400 Anteilen eines Verdünnungsmittels, wie Wasser, eingesetzt werden, wobei sich im Falle der Wasseraufbereitung z.B. eine Verdünnung im Bereich von etwa 1:400 in vielen Fällen als zweckmäßig erwiesen hat.

Das Desinfektionsmittel kann darüber hinaus - ebenfalls z.B. in reiner Form oder insbesondere in Form einer jeweils geeigneten Verdünnung - zur Desinfektion von Lebensmitteln, wie Getreide oder Mehl, Gewürze, Obst, Gemüse, Salat, Speiseeis und als Kühlmittel dienendes Eis, z.B. bei der Lagerung von Fleisch, Fischen und Meeresfrüchten anläßlich Transport und Verkauf, Tierprodukten und dergleichen, verwendet werden, wobei eine einwandfreie Abtötung von Keimen, wie Fäulnisbakterien etc., und somit bei einer sehr guten Gesundheitsverträglichkeit eine längere Lagerbeständigkeit erzielt wird. Des weiteren ist eine Verwendung eines erfindungsgemäß hergestellten Desinfektionsmittels zur Desinfektion von Saatgut geeignet, wobei es z.B. als Silage- und Konservierungsmittel bei der Einlagerung von Saatgut und Getreide in Silos eingesetzt werden kann. Ein weiteres mögliches Einsatzgebiet eines solchen Desinfektionsmittels besteht in der Desinfektion von Verpackungsbehältern und Verpackungen, insbesondere für hygienische Produkte, wie Lebensmittel, Pharmazeutika, sterile Gegenstände (wie Spritzen, Operationsbesteck etc.) und dergleichen. Überdies kann eine Verwendung eines solchen Desinfektionsmittels für Reaktionsmedien zur Durchführung von Lösungsmittel- und Emulsionspolymerisationen günstig sein, wobei der Einsatz von hierfür erforderlichen Emulgatoren verringert wird und die Polymerisationsrate überraschenderweise gesteigert werden kann, wie es sich bei einem Experiment anläßlich der Herstellung von Divinylstyrolkautschuk gezeigt hat. Ferner besteht ein weiteres bevorzugtes Anwendungsgebiet eines solchen Desinfektionsmittels als Additiv für insbesondere wasserlösliche Farben, Lacke und Pigmente, welchen eine biozide Wirkung verliehen werden kann, sowie als Additiv für Kühl- und Schmiermittel, z.B. für industrielle Kühlkreisläufe oder für technische Schmiermittel auf der Basis von Wasser, Öl oder Fett. Schließlich kann ein solches Desinfektionsmittels auch als Additiv für Treib- und Kraftstoffe, wie Heizöl, Benzin, Kerosin und dergleichen, verwendet werden.

Weitere Merkmale und Vorteile der Erfindung ergeben sich aus der nachfolgenden Beschreibung eines Ausführungsbeispiels eines erfindungsgemäßen Verfahrens zur Herstellung eines hypochlorige Säure enthaltenden Desinfektionsmittels durch elektrochemische Aktivierung einer verdünnten Wasser-/Chloridlösung unter Bezugnahme auf die Zeichnung. Dabei zeigen:
- Fig. 1: ein schematisches Verfahrensfließbild einer Ausführungsform eines Verfahrens zur Desinfektion von Wasser mittels eines durch elektrochemische Aktivierung (ECA) erhaltenen Desinfektionsmittels auf der Basis von hypochloriger Säure (HOCl); und
- Fig. 2: eine geschnitten dargestellte Detailansicht des Elektrolysereaktors gemäß Fig. 1.

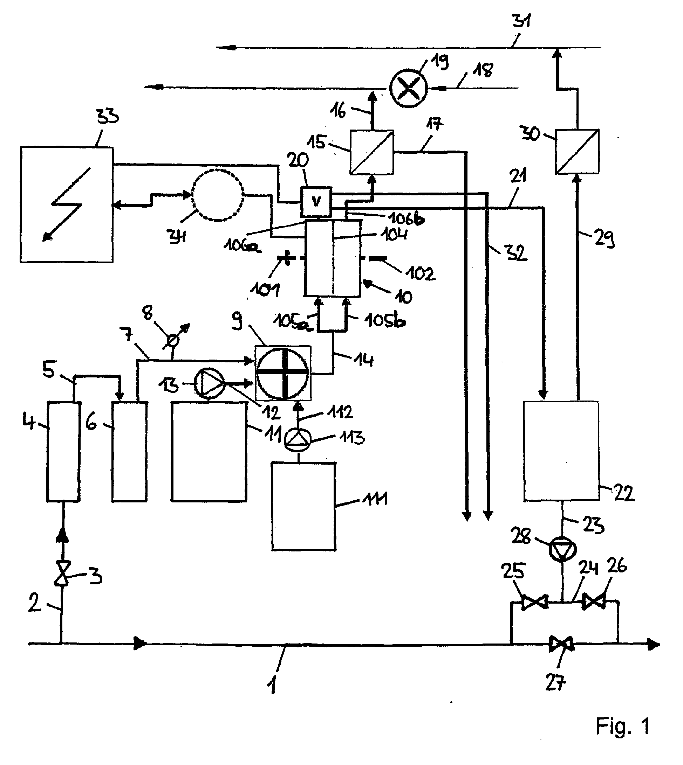

Die in Fig. 1 schematisch dargestellte, zur kontinuierlichen oder semikontinuierlichen Durchführung des erfindungsgemäßen Verfahrens geeignete Vorrichtung zur Desinfektion von Wasser durch elektrochemische Aktivierung (ECA) zweigt aus einer Hauptwasserleitung 1 über eine Abzweigleitung 2 Wasser ab, welches als Rohwasser für die elektrochemische Aktivierung verwendet wird. Die Hauptwasserleitung 1 kann beispielsweise Teil eines öffentlichen Wasserversorgungssystems sein. Die Abzweigleitung 2 ist mit einem Ventil 3, insbesondere in Form eines Steuerventils, sowie vorzugsweise mit einem dem Ventil 3 vor- oder nachgeordneten Filter (nicht dargestellt), insbesondere in Form eines Feinfilters mit einer Lochweite von beispielsweise etwa 80 bis 100 µm, ausgestattet und mündet stromab des Ventils 3 bzw. des Filters in einen Enthärter 4, welcher z.B. mit einem geeigneten Ionenaustauscherharz bestückt ist und die in dem Wasser enthaltenen zweiwertigen Härtebildner Calcium- und Magnesiumionen durch einwertige Ionen, wie beispielsweise Natriumionen, ersetzt. Um die Lebensdauer des weiter unten näher beschriebenen Elektrolysereaktors zu erhöhen bzw. um dessen Wartungsintervalle zu verlängern, hält der Enthärter 4 die Härte des Wassers z.B. auf einem Wert von höchstens 2°dH (entsprechend einer Konzentration an Erdalkalimetallionen von 0,358 mMol/l), vorzugsweise von höchstens 1°dH (entsprechend einer Konzentration an Erdalkalimetallionen von 0,179 mMol/l). Der Ablauf 5 des Enthärters 4 mündet in eine Entsalzungseinrichtung 6 zur Verminderung der spezifischen elektrischen - bzw. ionischen - Leitfähigkeit des Wassers, welche insbesondere von einer Membrananlage, wie einer Umkehrosmoseanlage oder von einer Mikro-, Nano- oder Ultrafiltrationsanlage gebildet sein kann und die spezifische elektrische Leitfähigkeit des Wassers z.B. auf einem Wert von höchstens etwa 100 µS/cm oder insbesondere auch von höchstens etwa 25 µS/cm hält, so daß es sich bei dem über eine Leitung 7 aus der Entsalzungseinrichtung 6 abgeführten Wasser um im wesentlichen vollentsalztes, sogenanntes "VE-Wasser" handelt, welches somit unabhängig von dem jeweils eingesetzten Wasser standardisiert ist. Im Ablauf 7 der Entsalzungseinrichtung 6 ist eine Leitfähigkeitsmeßeinrichtung 8, wie eine Leitfähigkeitsmeßzelle, -elektrode oder dergleichen, zur Überwachung der Einhaltung des jeweils gewünschten Wertes der spezifischen elektrischen Leitfähigkeit des Wassers angeordnet. Selbstverständlich kann insbesondere im Falle des Einsatzes von relativ weichem Wasser alternativ z.B. auch lediglich eine Entsalzungseinrichtung 6 ohne einer dieser vorgeschalteten Enthärtungsanlage 4 vorgesehen sein.

Darüber hinaus können insbesondere dann, wenn das zu desinfizierende Wasser einen verhältnismäßig hohen organischen Kohlenstoffgehalt aufweist, Maßnahmen vorgesehen sein, um den Kohlenstoffgehalt des Wassers zu erniedrigen. Hierzu kann beispielsweise zusätzlich eine UV-Oxidationsanlage (nicht gezeigt) vorgesehen sein, welche den gesamten organischen Kohlenstoffgehalt (TOC) und/oder den chemischen Sauerstoffbedarf (COD) auf einen Wert von z.B. höchstens etwa 25 ppb, insbesondere von z.B. höchstens etwa 20 ppb, bzw. auf einen Wert von z.B. höchstens etwa 7 mg O₂/l, insbesondere von z.B. höchstens etwa 5 mg O₂/l, absenkt. Zur Messung und/oder Kontrolle des TOC- bzw. COD-Wertes - oder auch anderer Gruppenparameter zur Erfassung des im Wasser enthaltenen organischen Kohlenstoffes, wie des gelösten organischen Kohlenstoffes (DOC, dissolved organic carbon) - können aus dem Stand der Technik bekannte Einrichtungen vorgesehen sein. Ebenfalls ist es auch in Verbindung mit dem Enthärter 4 und/oder der Entsalzungs- bzw. Membrananlage 6 denkbar, den über die Abzweigleitung 2 aus der Hauptwasserleitung 1 abgezweigten, elektrochemisch zu aktivierenden Teilstrom des Wassers nur bedarfsweise durch den Enthärter 4, die Membrananlage 6 bzw. die UV-Oxidationsanlage zu führen, nämlich dann, wenn der jeweilige Grenzwert überschritten wird, und die jeweilige Anlage andernfalls mittels einer Bypaßleitung (nicht gezeigt) zu überbrücken, was beispielsweise bei stark schwankender Qualität des Rohwassers sinnvoll sein kann.

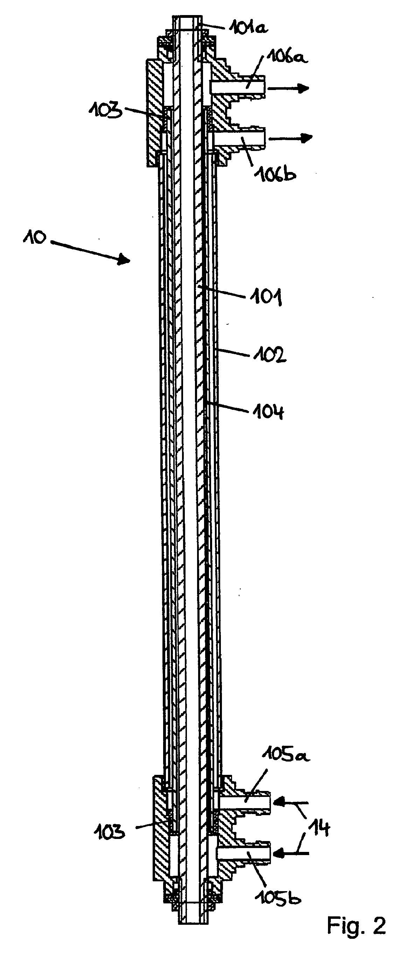

Der Ablauf 7 der Membrananlage 6 führt in einen Mischer 9, welcher in einen weiter unten unter Bezugnahme auf Fig. 2 näher erläuterten Elektrolysereaktor 10 mündet. Über die Abzweigleitung 2 ist somit ein mittels des Steuerventils 3 steuerbarer, enthärteter und deionisierter Teilstrom des in der Hauptwasserleitung 1 geförderten Wassers in den Elektrolysereaktor 10 überführbar, wobei z.B. ein Teilstrom des in der Hauptwasserleitung 1 geförderten Wassers in der Größenordnung von 1/200 über die Abzweigleitung 2 abgezweigt wird. Der Mischer 9 steht zulaufseitig einerseits - wie bereits erwähnt - mit dem Ablauf 7 der Membrananlage 6, andererseits mit einem Reservoir 11 zur Aufnahme einer Chloridlösung, insbesondere in Form einer im wesentlichen gesättigten Alkalimetallchloridlösung - im vorliegenden Fall z.B. einer im wesentlichen gesättigten Natriumchloridlösung -, in Verbindung, welche in dem Mischer 9 möglichst homogen miteinander vermischt werden und über eine gemeinsame, ablaufseitige Leitung 14 des Mischers 9 in den Elektrolysereaktor 10 gelangen. Die von dem Reservoir 11 in den Mischer 9 führende Leitung 12 ist ferner mit einer Dosierpumpe 13 ausgestattet, um dem enthärteten und entsalzten Wasser eine definierte Menge an Natriumchloridlösung, z.B. im Bereich von etwa 1 bis etwa 10 g/l NaCl, zuzusetzen.

In den Mischer 9 mündet des weiteren eine ebenfalls mit einer Dosierpumpe 113 bestückte Leitung 112 aus einem Reservoir 111, welches einen Protonenakzeptor in Form einer vorzugsweise mineralischen Base bzw. Lauge oder eines mineralischen Puffers in gelöster Form aufnimmt, wobei im vorliegenden Fall beispielsweise eine Pufferlösung in Form einer Natriumcarbonatlösung (Na₂CO_{3(aq)}), z.B. mit einer Konzentration von etwa 200 g/l eingesetzt wird, um dem mit Natriumchlorid beaufschlagten, enthärteten und entsalzten Wasser eine definierte Menge an Natriumcarbonat, z.B. im Bereich von etwa 100 bis etwa 500 mg/l Na₂CO₃, zuzusetzen. Der Mischer 9 kann hierbei beispielsweise von einem nicht näher wiedergegebenen Kugelmischer mit einer in dessen Mischbehälter angeordneten Kugel- oder Granulatschüttung gebildet sein, welcher eine konstant gleichmäßige Durchmischung des Wassers einerseits mit der Natriumchloridlösung, andererseits mit der Natriumcarbonatlösung gewährleistet. Fließt die gepufferte Wasser-/Chloridlösung durch eine solche Kugelschüttung hindurch, so werden die Kugeln zu Schwingungen angeregt werden und stellen dabei eine sehr homogene Durchmischung der zugesetzten Komponenten sicher. Alternativ kann im übrigen auch vorgesehen sein, daß der Protonenakzeptor bereits der in dem Reservoir 11 auf Vorrat gehaltenen Chloridlösung zugesetzt ist, z.B. in einem Massenverhältnis von etwa 1:5 bis etwa 1:20.

Wie insbesondere der Fig. 2 zu entnehmen ist, umfaßt der Elektrolysereaktor 10 eine Anode 101, welche beim vorliegenden Ausführungsbeispiel z.B. von einem mit katalytisch wirksamem Rutheniumdioxid (RuO₂) beschichteten Hohlrohr aus Titan gebildet ist und an welches endseitig über ein Außengewinde 101a der Pluspol einer nicht näher dargestellten Spannungsquelle anschließbar ist. Alternativ oder zusätzlich zu Rutheniumoxid kann beispielsweise auch eine Beschichtung auf der Basis von Iridiumdioxid (IrO₂) oder einer Mischung beider (RuO₂/IrO₂) oder anderer Oxide, wie Titandioxid (TiO₂), Bleidioxid (PbO₂) und/oder Mangandioxid (MnO₂), vorgesehen sein. Der Elektrolysereaktor 10 umfaßt des weiteren eine Kathode 102, welche zweckmäßig aus Edelstahl oder ähnlichen Materialien, wie Nickel (Ni), Platin (Pt) etc., gefertigt und beim vorliegenden Ausführungsbeispiel ebenfalls von einem Hohlrohr gebildet ist, innerhalb dessen die Anode 101 koaxial angeordnet ist. Die Kathode 102 ist mittels z.B. sie außenseitig umgreifender Klemmen (nicht dargestellt) an den Minuspol der nicht näher weitergegebenen Spannungsquelle anschließbar. Koaxial zu der Anode 101 sowie zu der Kathode 102 und zwischen diesen ist ein mittels Dichtringen 103 abgedichtetes, rohrförmiges Diaphragma 104 angeordnet, welches den zwischen der Anode 101 und der Kathode 102 befindlichen, ringförmigen Reaktionsraum in einen Anodenraum und in einen Kathodenraum abtrennt. Das Diaphragma 104 verhindert eine Vermischung der im Anodenraum und Kathodenraum befindlichen Flüssigkeit und läßt jedoch einen Stromfluß zu, welcher insbesondere für die Migration von Ionen keinen nennenswerten Widerstand darstellt. Das Diaphragma 104 ist beim vorliegenden Ausführungsbeispiel z.B. aus elektrisch - bzw. ionisch - leitfähigem, aber im wesentlichen flüssigkeitsdichtem, porösem Zirkoniumdioxid (ZrO₂) gebildet. Andere Materialien mit einem verhältnismäßig geringen Widerstand, wie Aluminiumoxid (Al₂O₃), Ionenaustauschmembranen etc., können gleichfalls eingesetzt werden.

Der Elektrolysereaktor 10 besitzt ferner zwei Einlässe 105a, 105b, über welche die aus dem Mischer 9 austretende und in der sich etwa T-förmig verzweigenden Leitung 14 geführte entsalzte und gepufferte Wasser-/Chloridlösung in den Reaktionsraum des Reaktors 10, d.h. in dessen Anodenraum und in dessen von diesem durch das Diaphragma 104 räumlich getrennten Kathodenraum, eingespeist wird. Wie wiederum insbesondere aus Fig. 2 und überdies aus Fig. 1 ersichtlich, weist der Elektrolysereaktor 10 ferner zwei Auslässe 106a, 106b auf, über welche die Lösung nach der chemischen Aktivierung in dem Reaktor 10 aus diesem abführbar ist. Während der Auslaß 106a zum Abführen der elektrochemisch aktivierten Lösung aus dem Anodenraum des Reaktors 10 - d.h. zum Abführen des sogenannten "Anolyts" - dient, dient der Auslaß 106b zum Abführen der elektrochemisch aktivierten Lösung aus dem Kathodenraum des Reaktors 10 - d.h. zum Abführen des sogenannten "Katholyts". Wie bereits angedeutet, kann dabei der Volumenstrom durch den Kathodenraum des Reaktors 10 kleiner gewählt werden als der durch dessen Anodenraum, um die Menge an desinfektiös jedenfalls erheblich geringer wirksamem und in der Regel zu verwerfendem Katholyt möglichst gering zu halten.

Nachfolgend sind die geometrischen Abmessungen des im vorliegenden Ausführungsbeispiel eingesetzten Elektrolysereaktors 10 in Form einer Auflistung wiedergegeben:
Länge des Kathodenraumes: 18,5 cm;
Volumen des Kathodenraumes: 10 ml;
Fläche der Kathode: 92,4 cm²;
Länge des Anodenraumes: 21,0 cm;
Volumen des Anodenraumes: 7 ml;
Fläche der Anode: 52,7 cm²;
Abstand zwischen Kathode und Anode: ca. 3 mm (einschließlich Diaphragma).

Der Elektrolysereaktor 10 wird z.B. mit einem Durchsatz von 60 bis 140 l/h betrieben, wobei selbstverständlich auch größere Durchsätze möglich sind, indem größere Reaktoren und/oder mehrere, parallel geschaltete Reaktoren eingesetzt werden. Vorzugsweise fährt der Elektrolysereaktor 10 stets unter Vollast, wobei er bedarfsweise abgeschaltet werden kann und Spitzenlasten über einen weiter unten noch näher erläuterten Speichertank für die elektrochemisch aktivierte, anodische Lösung abgefangen werden können.

Wie wiederum aus Fig. 1 ersichtlich, mündet der Auslaß 106b aus dem Kathodenraum des Elektrolysereaktors 10 in einen Gasabscheider 15, aus welchem das Abgas, insbesondere Wasserstoff (H₂), über eine optional vorgesehene Abgasleitung 16 abgeführt wird, während der Katholyt selbst, d.h. die aus dem Kathodenraum des Elektrolysereaktors 10 abgeführte Lösung, über eine Leitung 17, z.B. in die Kanalisation eines kommunalen Abwassersystems, abgeführt wird. Die Abgasleitung 16 mündet beim vorliegenden Ausführungsbeispiel in eine mit Verdünnungsluft gespeiste Abluftleitung 18, welche mit einem explosionsgeschützten Niederdruckgebläse 19 ausgestattet ist.

Der Auslaß 106a aus dem Anodenraum des Elektrolysereaktors 10 mündet über ein Steuerventil 20 und eine Leitung 21 in einen Speichertank 22, aus welchem der Anolyt über eine Leitung 23 der Hauptwasserleitung 1 zum Zwecke der Desinfektion des hierin geführten Wassers zugesetzt werden kann. Dies geschieht beim vorliegenden Ausführungsbeispiel über eine Bypaßleitung 24, welche durch jeweils ein stromab bzw. stromauf der Anschlußstelle der Leitung 23 in die Bypaßleitung 24 vorhandenes Steuerventil 25, 26 auf- und zusteuerbar ist. Ein weiteres Steuerventil 27 ist in dem von der Bypaßleitung 24 überbrückten Abschnitt der Hauptwasserleitung 1 angeordnet. In der den Speichertank 22 mit der Bypaßleitung 24 der Hauptwasserleitung 1 verbindenden Leitung 23 ist ferner eine Dosierpumpe 28 vorgesehen, welche zum gesteuerten Zudosieren des Anolyts aus dem Speichertank 22 in die Hauptwasserleitung 1 dient. Eine Abgasleitung 29, insbesondere für in dem Anolyt gegebenenfalls freigesetztes Chlorgas (Cl₂), mündet aus dem Gasraum des Speichertanks 22 in einen Gasabscheider 30, dessen Gasraum wiederum mit einer Abführleitung für Chlorgas verbunden ist. In dem Gasabscheider abgeschiedene Flüssigkeiten, wie beispielsweise auskondensiertes Wasser, können ebenfalls z.B. in die Kanalisation eines kommunalen Abwassersystems abgeführt werden (nicht dargestellt). Die Funktion der Bypaßleitung 24, welcher das Desinfektionsmittel in Form des Anolyts, also der im Anodenraum des Elektrolysereaktors 10 elektrochemisch aktivierten Lösung, zugesetzt wird, besteht darin, daß im Normalbetrieb der gesamte, in der Hauptwasserleitung 1 geführte Wasserstrom über die Bypaßleitung 24 geführt und mit dem Desinfektionsmittel beaufschlagt werden kann. Zu Wartungs- und Installationszwecken kann die Bypaßleitung 24 indes von der Hauptwasserleitung 1 über die Ventile 25, 26 abgetrennt werden.

Ferner kann vorgesehen sein, daß beim Anfahren des Elektrolysereaktors 10 über einen bestimmten Zeitraum auch der "Anolyt", d.h. die elektrochemisch aktivierte, anodische Lösung, verworfen wird, um anfängliche Qualitätsbeeinträchtigungen, so lange der Elektrolysereaktor 10 noch nicht seinen gewünschten Betriebszustand erreicht hat, auszuschließen. Zu diesem Zweck geht von dem Ventil 20 parallel zu der in den Speichertank 22 führenden Leitung 21 eine weitere Leitung 32 aus, welche z.B. in die Kanalisation eines kommunalen Abwassersystems führt, um - je nach Schaltstellung des Ventils 20 - auch den Anolyt verwerfen zu können.

Zur Reinigung des Elektrolysereaktors 10 kann darüber hinaus optional ein Speicher (nicht gezeigt) zur Aufnahme von Reinigungsflüssigkeit, z.B. Essigsäure oder dergleichen, sowie gegebenenfalls ein weiterer Speicher (ebenfalls nicht gezeigt) zur Aufnahme von verbrauchter Reinigungsflüssigkeit vorgesehen sein, welche jeweils über eine Zu- bzw. Ableitung mit dem Reaktor 10 verbunden und mittels Ventilen mit dem Reaktor koppelbar bzw. von diesem entkoppelbar sind.

Die Vorrichtung gemäß Fig. 1 umfaßt des weiteren eine Steuerung 33, z.B. in Form einer elektronischen Datenverarbeitungseinheit, welche einerseits mit dem Steuerventil 20, um bedarfsweise die Leitung 21 bzw. die Leitung 32 auf- und zu zu steuern, andererseits über eine Potentialkontrolle 34 mit dem Elektrolysereaktor 10 in Verbindung steht, um in dem Elektrolysereaktor 10 zwischen der Anode 101 und der Kathode 102 (Fig. 2) den z.B. von einem Amperemeter (nicht gezeigt) gemessenen, gewünschten Stromfluß zu steuern. Dies geschieht aus den eingangs erwähnten Gründen beispielsweise derart, daß sich zum einen in dem Desinfektionsmittel in Form der elektrochemisch aktivierten, anodischen Lösung ein pH-Wert im Bereich von etwa 3 einstellt und sich zum anderen ein Redoxpotential im Bereich von etwa 1340 mV ergibt. Zu diesem Zweck ist in der aus dem Anodenraum des Elektrolysereaktors 10 führenden Leitung 106a zweckmäßig ein pH-Meter (nicht gezeigt) sowie vorzugsweise auch eine weitere Leitfähigkeitsmeßzelle oder -elektrode (ebenfalls nicht gezeigt) vorgesehen, welche es der Steuerung 33 ermöglichen, die dem Rohwasser über die Pumpe 13 zugesetzte Menge an Natriumchloridlösung derart zu steuern, daß sich die gewünschten Prozeßparameter ergeben. Die Steuerung 33 kann ferner z.B. eine in den Reaktor 10 integrierte, steuerbare Pumpe (nicht gezeigt) zur steuerbaren Förderung der Wasser-/Chloridlösung durch den Elektrolysereaktor 10 hindurch steuern, wobei mittels der Pumpe folglich der Volumenstrom bzw. die Verweilzeit der Wasser-/Chloridlösung durch den bzw. in dem Reaktor 10 einstellbar ist. Schließlich ist die Steuerung 33 auch mit der Dosierpumpe 113 wirkverbunden, um entsprechend der gewünschten Menge an freiem Chlor in dem Desinfektionsmittel bzw. in dem Anolyt dem Mischer 9 die erforderliche Menge an Natriumcarbonatpufferlösung zuzusetzen. Bezüglich steuerungstechnischer Details zur Steuerung bzw. Regelung des Verfahrens zur Erzeugung des Desinfektionsmittels in Form der Anolyts, welche im übrigen von PID-Reglern Gebrauch machen kann, sei auf die weitere oben bereits erwähnte WO 2007/093395 A2 verwiesen.

Das solchermaßen, aus VE-Wasser als Rohwasser erzeugtes Desinfektionsmittel in Form der anodisch erzeugten elektrochemisch aktivierten Lösung (Anolyt) besitzt bei einem pH-Wert im Bereich von 3,0 und einem Redoxpotential im Bereich von 1340 mV (vs. SHE bzw. vs. NHE) eine Konzentration an freiem Chlor im Bereich von etwa 25 mg/l bis 30 mg/l, entsprechend einer Konzentration an desinfektiös besonders wirksamer hypochloriger Säure (HClO) im Bereich von etwa 18,5 mg/l bis 22,2 mg/l.

Zum Vergleich erhielte man bei einem ebenfalls aus VE-Wasser als Rohwasser mit denselben Verfahrensparametern, aber ohne einen erfindungsgemäßen Zusatz des Protonenakzeptors erzeugten Desinfektionsmittel nur eine Konzentration von freiem Chlor von kleiner 1 mg/l, entsprechend einer Konzentration an hypochloriger Säure (HClO) von ebenfalls kleiner 1 mg/l.

## Patentansprüche

1. Verfahren zur Herstellung eines hypochlorige Säure (HOCL) und/oder Hypochlorit (OCl⁻) enthaltenden Desinfektionsmittels durch elektrochemische Aktivierung einer verdünnten Wasser-/Chloridlösung, indem enthärtetem oder demineralisiertem Wasser eine Chloridlösung zugesetzt und die solchermaßen erhaltene verdünnte Wasser-/Chloridlösung in einem Elektrolysereaktor (10) mit wenigstens einem Kathodenraum mit einer Kathode (102) und mit wenigstens einem hiervon räumlich getrennten Anodenraum mit einer Anode (101) durch Anlegen einer elektrischen Spannung an die Elektroden (101, 102) mit einem elektrischen Strom beaufschlagt wird, um das Chlorid im Anodenraum zumindest teilweise in hypochlorige Säure und/oder Hypochlorit zu überführen, **dadurch gekennzeichnet, daß** der Wasser-/Chloridlösung vor Eintritt in den Elektrolysereaktor (10) wenigstens ein Protonenakzeptor zugesetzt wird.

2. Verfahren nach Anspruch 1, **dadurch gekennzeichnet, daß** ein Protonenakzeptor in Form einer Base und/oder in Form eines Puffers eingesetzt wird.

3. Verfahren nach Anspruch 1 oder 2, **dadurch gekennzeichnet, daß** ein mineralischer Protonenakzeptor eingesetzt wird.

4. Verfahren nach einem der Ansprüche 1 bis 3, **dadurch gekennzeichnet, daß** ein Protonenakzeptor eingesetzt wird, dessen Kation(en) die Wertigkeit +I besitzen.

5. Verfahren nach Anspruch 4, **dadurch gekennzeichnet, daß** ein Protonenakzeptor eingesetzt wird, dessen Kationen aus der Gruppe der Alkalimetalle, insbesondere aus der Gruppe Lithium (Li), Natrium (Na) und Kalium (K), gewählt sind.

6. Verfahren nach einem der Ansprüche 1 bis 5, **dadurch gekennzeichnet, daß** ein Protonenakzeptor aus der Gruppe der Alkalimetallhydroxide (MeOH), Alkalimetallhydrogencarbonate (MeHCO₃) und Alkalimetallcarbonate (Me₂CO₃) eingesetzt wird.

7. Verfahren nach einem der Ansprüche 1 bis 6, **dadurch gekennzeichnet, daß** der pH-Wert des im Anodenraum des Elektrolysereaktors (10) erzeugten Desinfektionsmittels auf einen Wert zwischen 2,5 und 6, insbesondere zwischen 2,5 und 5, vorzugsweise zwischen 2,5 und 4, gesteuert wird.

8. Verfahren nach einem der Ansprüche 1 bis 7, **dadurch gekennzeichnet, daß** das eingesetzte enthärtete oder demineralisierte Wasser eine Härte zwischen 0 und 4 dH, insbesondere zwischen 0 und 2 dH aufweist.

9. Verfahren nach einem der Ansprüche 1 bis 8, **dadurch gekennzeichnet, daß** die spezifische elektrische Leitfähigkeit des eingesetzten Wassers auf einen Wert von höchstens 350 µS/cm, insbesondere höchstens 150 µS/cm, vorzugsweise höchstens 100 µS/cm, eingestellt wird.

10. Verfahren nach einem der Ansprüche 1 bis 9, **dadurch gekennzeichnet, daß** zur Enthärtung oder Demineralisierung des eingesetzten Wassers ein Membranverfahren, insbesondere Umkehrosmose, Mikro-, Nano- oder Ultrafiltration, eingesetzt wird.

11. Verfahren nach einem der Ansprüche 1 bis 10, **dadurch gekennzeichnet, daß** die Chloridkonzentration der dem Elektrolysereaktor (10) zugesetzten, verdünnten Wasser-/Chloridlösung auf einen Wert von höchstens 20 g/l, insbesondere zwischen 0,1 und 10 g/l, vorzugsweise zwischen 0,1 und 5 g/l gesteuert wird.

12. Verfahren nach einem der Ansprüche 1 bis 11, **dadurch gekennzeichnet, daß** die Konzentration des Protonenakzeptors in der dem Elektrolysereaktor (10) zugesetzten Wasser-/Chloridlösung auf einen Wert zwischen 1 und 5000 mg/l, insbesondere zwischen 1 und 1000 mg/l, gesteuert wird.

13. Verfahren nach einem der Ansprüche 1 bis 12, **dadurch gekennzeichnet, daß** ausschließlich die in dem Anodenraum des Elektrolysereaktors (10) erzeugte, elektrochemisch aktivierte, verdünnte Lösung als Desinfektionsmittel verwendet wird.

14. Desinfektionsmittel auf der Basis einer hypochlorige Säure (HOCL) und/oder Hypochlorit (OCl⁻) enthaltenden, elektrochemisch aktivierten, anodischen, verdünnten, enthärteten oder demineralisierten, wäßrigen Lösung, hergestellt nach einem Verfahren nach einem der vorangehenden Ansprüche, wobei das Desinfektionsmittel einen Protonenakzeptor, insbesondere nach einem der Ansprüche 2 bis 6, enthält.

15. Desinfektionsmittel nach Anspruch 14, **dadurch gekennzeichnet, daß** es einen pH-Wert zwischen 2,5 und 6, insbesondere zwischen 2,5 und 5, vorzugsweise zwischen 2,5 und 4, aufweist.
